Europäisches Patentamt

European Patent Office

Office européen des brevets

(11) Veröffentlichungsnummer: **0 404 090**
**A1**

## (12) EUROPÄISCHE PATENTANMELDUNG

(21) Anmeldenummer: 90111625.1

(51) Int. Cl.⁵: **A01F 15/08**

(22) Anmeldetag: **20.06.90**

(30) Priorität: **23.06.89 US 370555**

(43) Veröffentlichungstag der Anmeldung:
**27.12.90 Patentblatt 90/52**

(84) Benannte Vertragsstaaten:
**DE FR IT**

(71) Anmelder: **DEERE & COMPANY**
**1 John Deere Road**
**Moline, Illinois 61265(US)**

(72) Erfinder: **Anstey, Henry Dennis**
**Rural Route 4, Box 188A**
**Ottumwa, Iowa 52501(US)**
Erfinder: **Ardueser, William Albert**
**316 West Fifth Street**
**Ottumwa, Iowa 52501(US)**
Erfinder: **Rumph, George William**
**Rural Route 3, Box 183**
**Bloomfield, 52537(US)**

(74) Vertreter: **Feldmann, Bernhard et al**
**DEERE & COMPANY European Office Patent**
**Department Steubenstrasse 36-42**
**D-6800 Mannheim 1(DE)**

(54) **Rundballenpresse mit einer Vorrichtung zum Umhüllen eines Rundballens in einer Ballenformkammer.**

(57) Bei einer Rundballenpresse mit einer Vorrichtung zum Umhüllen eines fertig gewickelten Rundballens in einer Ballenformkammer, die ein Zuführgehäuse mit einer Bodenwand und einer ersten im wesentlichen vertikal verlaufenden und sich quer über die Breite der Ballenformkammer erstreckenden Wand zur Aufnahme des rollenförmigen Umhüllungsmaterials aufweist, das über einen aus einer Offenstellung in eine Betriebsstellung vertikal verschwenkbaren, mit einer Oberwand versehenen Deckel (76) in der Betriebsstellung verschließbar ist, ist die erste Wand (40) an ihrem oberen Ende mit einem von der Ballenformkammer fort gerichteten Flansch (42) versehen, und die Oberwand erstreckt sich in der Betriebsstellung zumindest teilweise abdichtend unter den Flansch (42).

FIG. 5

EP 0 404 090 A1

## Rundballenpresse mit einer Vorrichtung zum Umhüllen eines Rundballens in einer Ballenformkammer

Die Erfindung bezieht sich auf eine Rundballenpresse mit einer Vorrichtung zum Umhüllen eines fertig gewickelten Rundballens in einer Ballenformkammer, die ein Zuführgehäuse mit einer Bodenwand und einer ersten im wesentlichen vertikal verlaufenden und sich quer über die Breite der Ballenformkammer erstreckenden Wand zur Aufnahme des rollenförmigen Umhüllungsmaterials aufweist, das über einen aus einer Offenstellung in eine Betriebsstellung vertikal verschwenkbaren, mit einer Oberwand versehenen Deckel in der Betriebsstellung verschließbar ist.

Bei dieser Rundballenpresse (US-A-4 691 503) ist der Dekkel im unteren Bereich des Zuführgehäuses um eine horizontal verlaufende Achse schwenkbar angeordnet und in seiner Offenstellung nach unten gekippt. Um in seine Betriebsstellung zu gelangen, muß der Deckel nach oben von Hand verschwenkt werden, in der er mit seiner offenen Stirnseite gegen die erste Wand anliegt. Hier muß er über gesonderte Arretierungsmittel festgesetzt werden. Damit kein Wasser, Staub oder andere Fremdkörper in das Zuführgehäuse gelangen können, müssen im Bereich der offenen Stirnseite des Deckels zusätzliche Dichtungselemente vorgesehen werden. Diese Dichtungselemente halten natürlich Feuchtigkeit bzw. andere ungewünschte Außeneinwirkungen fern, doch bedeutet das Anbringen der Dichtungselemente einen zusätzlichen Kostenfaktor.

Die mit der Erfindung zu lösende Aufgabe wird darin gesehen, den Deckel für das Zuführgehäuse vorteilhafter auszubilden und anzuordnen. Diese Aufgabe ist nach der Erfindung dadurch gelöst worden, daß die erste Wand an ihrem oberen Ende mit einem von der Ballenformkammer fort gerichteten Flansch versehen ist und sich die Oberwand in der Betriebsstellung zumindest teilweise abdichtend unter den Flansch erstreckt.

Auf diese Weise ist in der Betriebsstellung zwischen dem Flansch und Bereichen der Oberwand des Deckels eine schindelartige Verbindung geschaffen, die ein Eindringen von Feuchtigkeit etc. in diesem Bereich ohne Zuhilfenahme von Dichtungsmaterial positiv verhindert, wodurch sonst die Rolle mit dem Umhüllungsmaterial Schaden nehmen könnte. Die Dichtungswirkung kann noch dadurch verstärkt werden, wenn Flansch und Oberwand eine gewisse Schräge aufweisen.

Nach der Erfindung wird ferner vorgeschlagen, daß unterhalb des relativ kurzen Flansches und mit diesem verbunden zwei Träger vorgesehen sind, die jeweils ein Scharnier aufnehmen, das anderenends mit der Oberwand des Deckels verbunden ist. Durch diese Maßnahme befindet sich die horizontale Schwenkachse relativ nahe an der ersten Wand, so daß der Deckel in seine Betriebsstellung nach unten verschwenkt wird und infolge seiner Schwerpunktlage in dieser nicht unbedingt festgesetzt werden muß.

Um auch ein seitliches Eindringen von Feuchtigkeit etc. zu verhindern, kann nach der Erfindung außerdem vorgesehen werden, daß die erste Wand an ihren Seiten mit vertikal verlaufenden Flanschen versehen ist, die in der Betriebsstellung die Seitenwände des Deckels umfassen.

Um in seine Offenstellung zu gelangen, wird der Deckel von Hand nach oben geschwenkt, und wenn erfindungsgemäß der Deckel über mindestens ein Federelement in seiner Offenstellung und gegebenenfalls in seiner Betriebsstellung gehalten wird, dann unterstützt das Federelement die Schwenkbewegung nach oben in die Offenstellung, so daß hierzu kaum Muskelkraft aufgewendet werden muß. In jedem Fall stellt das Federelement eine einfache Sicherung in den beiden Endstellungen dar.

Zweckmäßig können als Federelement zwei Gasdruckfedern vorgesehen sein, die einenends an den auch mit der ersten Wand verbundenen Trägern und anderenends an mit Bezug auf die Betriebsstellung im unteren Bereich einer Rückwand des Deckels oder der Seitenwände angebrachten Laschen angreifen. Diese sind damit derart angeordnet, daß sie nach dem Verschwenken über ihre Mittenlage hinaus bestrebt sind, den Deckel in seine jeweilige Endlage zu ziehen und dort zu halten.

Fertigungstoleranzen können leicht ausgeglichen werden, wenn die Scharniere einstellbar ausgebildet sind.

In der Zeichnung ist ein nachfolgend näher erläutertes Ausführungsbeispiel der Erfindung dargestellt. Es zeigt:

Fig. 1 den rückwärtigen Teil einer großen Rundballenpresse mit angebauter Vorrichtung zum Umhüllen eines Rundballens in perspektivischer Ansicht,

Fig. 2 ein Zuführgehäuse in Seitenansicht mit hochgeschwenktem Deckel und einer Rolle mit Umhüllungsmaterial in ihrer Ladeposition,

Fig. 3 eine ähnliche Darstellung wie in Fig. 2, wobei jedoch der Deckel geschlossen ist und die Rolle mit dem Umhüllungsmaterial sich in ihrer Betriebsstellung befindet,

Fig. 4 eine Draufsicht auf den rechten Endteil des Deckels und

Fig. 5 einen Schnitt nach der Linie 5 - 5 in Fig. 4.

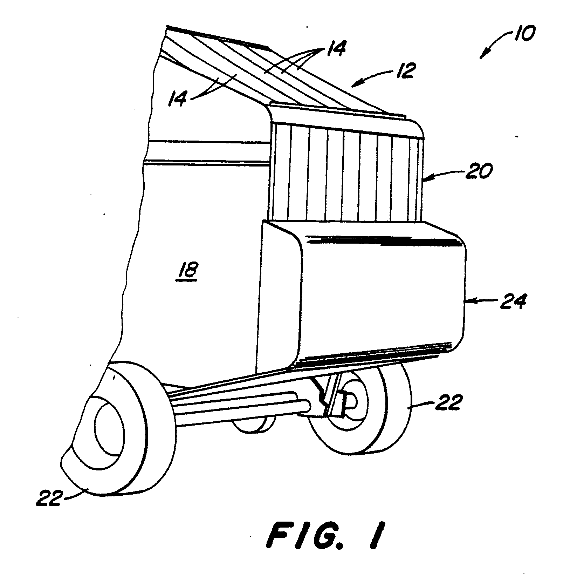

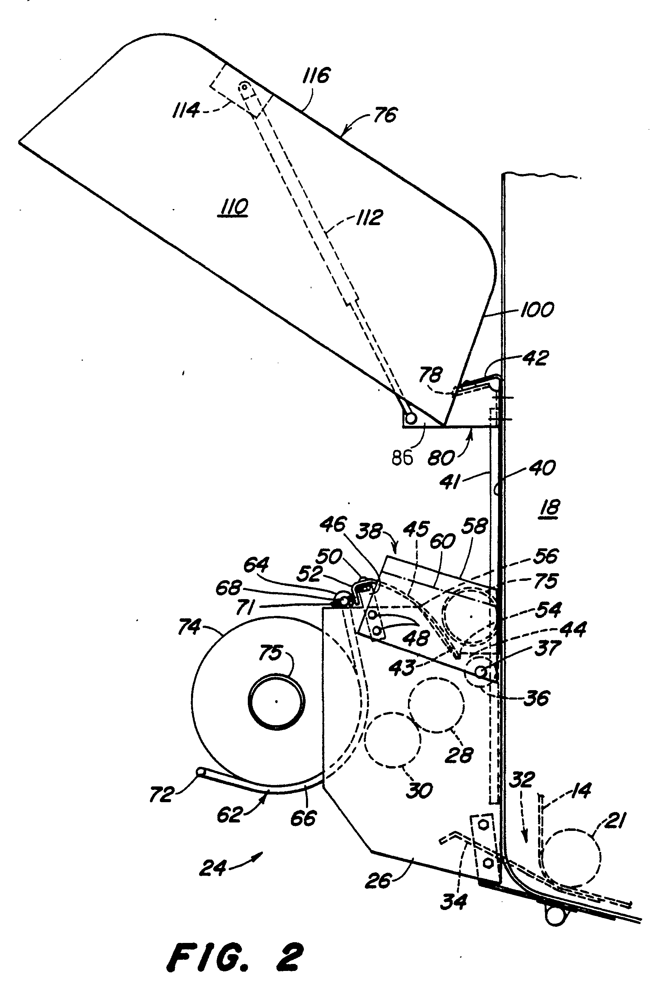

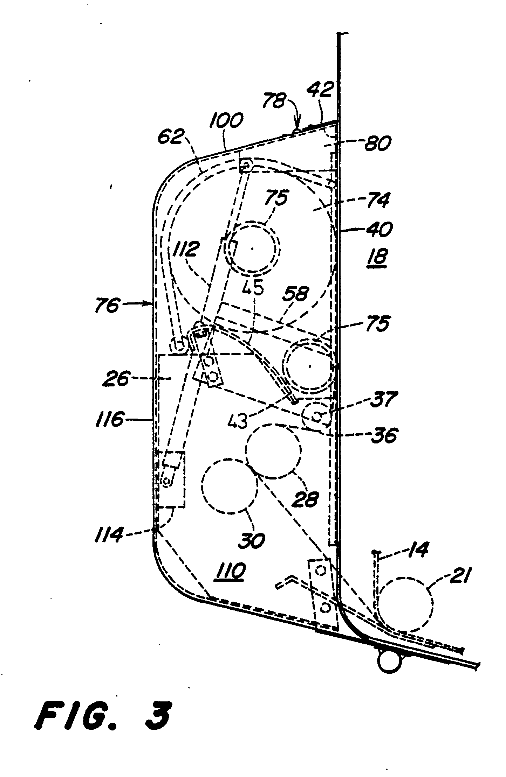

In Fig. 1 der Zeichnung ist der rückwärtige Teil einer großen Rundballenpresse 10 dargestellt, die eine Ballenformkammer 12 veränderbarer Größe aufweist. Letztere ist aus einer Vielzahl von nebeneinanderliegenden endlosen Riemen 14, zwei gegenüberliegenden nicht dargestellten Seitenwänden eines vorderen Teils, die einen ersten Satz Riemenleitrollen aufnehmen, und aus zwei sich gegenüberliegenden Seitenwänden 18 einer Auswurfklappe 20 für den fertig gewickelten Ballen gebildet, die einen zweiten Satz Riemenleitrollen einschließlich einer unteren in Fig. 2 und 3 erkennbaren Riemenleitrolle 21 aufnehmen. Die Rundballenpresse 10 ist auf zwei Laufrädern 22 angeordnet und wird im Einsatz von einem Ackerschlepper gezogen.

Aus den Fig. 2 bis 5 ist eine Vorrichtung 24 zum Umwickeln eines fertiggestellten Ballens in der Ballenformkammer 12 mit Umhüllungsmaterial im einzelnen ersichtlich, die an einem rückwärtigen und unteren Teil der Auswurfklappe 20 angeschlossen ist. Die Vorrichtung 24 weist sich gegenüberliegende Tragwände 26 auf, die mit vorderen hochstehenden Flanschen versehen sind, die mit entsprechenden Flanschen an den rückwärtigen Enden der Seitenwände 18 der Auswurfklappe 20 verbindbar sind. Die sich gegenüberliegenden Enden von zwei übereinander angeordneten Zuführwalzen 28 und 30 für das Umhüllungsmaterial sind in den Tragwänden 26 drehbar gelagert. Wie aus den Fig. 2 und 3 ersichtlich ist, liegt die Zuführwalze 28 oberhalb und vor der Zuführwalze 30, so daß ein Zuführweg für das Umhüllungsmaterial entsteht, der tangential zu dem Ausgang der Zuführwalzen 28 und 30 verläuft und sich bis zu einem Einzug 32 erstreckt, der im wesentlichen aus einem Führungsblech 34 und dem Teil der Riemen 14 gebildet wird, die um die untere rückwärtige Riemenleitrolle 21 an der Auswurfklappe 20 geführt sind. Oberhalb und vor der Zuführwalze 28 ist noch eine Spreizwalze 36 in den oberen vorderen Bereichen der Tragwände 26 auf Schrauben 37 drehbar gelagert. Die Spreizwalze 36 ist an ihren Enden mit gegenläufigen nicht dargestellten Wendeln versehen, die zum Auseinanderbreiten des Umhüllungsmaterials dienen, wenn dieses in die Ballenformkammer 12 eingespeist wird.

Die Vorrichtung 24 weist noch ein Zuführgehäuse 38 mit einer ersten vorderen Wand 40 auf, die aus einem vertikal ausgerichteten Blechteil besteht, der sich zwischen den rückwärtigen Enden der Seitenwände 18 der Auswurfklappe 20 erstreckt und mit diesen verbunden ist. Aus Fig. 2 ist am besten erkennbar, daß die sich gegenüberliegenden seitlichen Außenkanten der ersten Wand 40 durch vertikal verlaufende Flansche 41 gebildet werden, während der obere Endteil der ersten Wand 40 einen nach rückwärts gerichteten und leicht nach unten geneigt verlaufenden, relativ kurzen Flansch 42 aufweist. Gleichfalls weist das Zuführgehäuse 38 eine sich nach vorne unten erstreckende Bodenwand 43 auf, die zusammen mit der vorderen Wand 40 zu einem Querspalt 44 oder Materialdurchgangsweg konvergiert, der zwischen der vorderen Kante der Bodenwand 43 und der vorderen Wand 40 gebildet ist. Die obere Oberfläche 45 der Bodenwand 43 ist von vorne nach hinten konvex gebogen, wobei diese Formgebung speziell ausgewählt wurde, um mit der vorderen Wand 40 derart zusammenzuwirken, daß sich ein Reibschluß mit dem sich noch auf der Rolle befindlichen Umhüllungsmaterial ergibt. Zwei 1-förmig ausgebildete Laschen 46 mit nach außen abgebogenen Enden sind mit den oberen rückwärtigen Teilen der Tragwände 26 über jeweils zwei Abstand zueinander aufweisende Schrauben 48 verbunden. Obere rückwärtige Endteile der gebogenen Bodenwand 43 liegen auf den abgebogenen Enden der beiden Laschen 46 auf und sind mit diesen über Schrauben 50 verbunden. Das rückwärtige Ende der Bodenwand 43 ist nach unten abgebogen, so daß eine abgerundete Kante 52 entsteht, die das Einlegen einer neuen Rolle mit Umhüllungsmaterial erleichtert. Das vordere Ende der Bodenwand 43 wird von Aussparungen 54 gehalten, die in obere vordere Teile der Tragwände 26 eingearbeitet sind. Ein jeweils dritter Tragpunkt für die Bodenwand 43 wird durch Kanten 56 gebildet, die durch eine Abknickung der oberen Seiten der Tragwände 26 in deren mittleren Bereich entstehen. Die seitlich gerichteten Bewegungen einer sich auf der Bodenwand 43 befindlichen Rolle mit Umhüllungsmaterial werden durch zwei sich gegenüberliegende Halteplatten 58 begrenzt, die jeweils mit der zugehörigen Tragwand 26 über die Schrauben 48 und die Schrauben 37 verbunden sind. Auch der obere Teil einer jeden Halteplatte 58 ist nach außen abgebogen, so daß eine abgerundete Kante 60 entsteht, gegen die die Seiten des Umhüllungsmaterials anliegen können.

Ein Ladebügel 62 oder -arm für eine neue Rolle mit Umhüllungsmaterial ist vertikal schwenkbar im rückwärtigen oberen Bereich der beiden Tragwände 26 angeordnet, in seiner in Fig. 2 dargestellten Position in Ladestellung und in seiner Stellung nach Fig. 3 in Betriebsstellung dargestellt. Im einzelnen sind hierzu an den oberen rückwärtigen Enden der Tragwände 26 zueinander ausgerichtete Scheiben 64 derart angeschweißt, daß eine horizontale Schwenkachse entsteht. Der Ladebügel 62 besteht aus einem Gestell mit sich gegenüberliegenden Schenkeln 66, die entsprechend dem Umfang einer vollen Rolle mit Umhüllungsmaterial gebogen sind und nach außen gebogene Enden 68 aufweisen, die von den Scheiben 64 aufgenommen werden. Eine Sicherung erfolgt durch Stifte 71, die durch entsprechende Bohrungen in den Enden 68 der Schenkel 66 gesteckt werden können. Die beiden Enden 68 abgelegenen Enden der Schenkel 66 sind miteinander über einen Querteil verbunden, der als Griffteil 72 dient. Wenn sich der Ladebügel 62 in seiner unteren in Fig. 2 wiedergegebenen Aufnahme- oder Ladestellung befindet, liegen die gebogenen Schenkel 66 relativ niedrig zur Aufnahme einer Rolle 74 mit dem Umhüllungsmaterial. Eine Rolle 74, die zwischen 75 und 80 Pfund wiegen kann, kann dann von dem Boden aus oder vorzugsweise von der Ladepritsche eines Fahrzeuges eingelegt werden. Jedenfalls sollen beim Einlegen von Hand einer Rolle 74 so wenig wie möglich Muskelkräfte erforderlich werden. In der Regel ist das Umhüllungsmaterial auf einer Papprolle 75 aufgerollt, die in Fig. 3 zweimal in ihren verschiedenen Positionen in strichlinierten Linien wiedergegeben ist. Sobald eine Rolle 74 in die entsprechende Rundungen aufweisenden Schenkel 66 des Ladebügels 62 eingelegt worden ist, wird der Rollenanfang in den Zuführmechanismus eingespeist, wozu zunächst der Rollenanfang über die Spreizwalze 36 gezogen wird. Danach kann die Rolle 74 mit dem Umhüllungsmaterial auf die Oberfläche 44 der Bodenwand 43 dadurch verbracht werden, daß der Griffteil 72 angehoben und in seine in Fig. 3 dargestellte Position verschwenkt wird, die der Betriebsstellung entspricht. Sodann läßt sich der Rollenanfang durch den Spalt zwischen den beiden Zuführwalzen 28 und 30 durchstecken. Die Tatsache, daß lediglich die Schenkel 66 des Ladebügels 62 mit der Rolle 74 Umhüllungsmaterial Kontakt haben, ist deshalb von Bedeutung, weil dadurch der beim Abrollen der Rolle entstehende Reibwiderstand relativ klein ist. An dieser Stelle ist darauf hinzuweisen, daß die Hebelarme und Anlenkstellen für den Ladebügel 62 derart gewählt sind, daß die zum Hochschwenken des Ladebügels 62 erforderliche Kraft etwa dem halben Rollengewicht entspricht und daß der in seine Betriebsstellung nach Fig. 3 verschwenkte Ladebügel 62 in dieser aufgrund der Schwerkraft verbleibt. Außerdem ist noch ein die Vorrichtung 24 in ihrer Betriebsstellung abdeckender Dekkel 76 vorgesehen, der in Fig. 2 in seiner hochgeschwenkten Offenstellung und in Fig. 3 in seiner geschlossenen Stellung wiedergegeben ist. Der Deckel 76 ist um Scharniere 78 verschwenkbar, die über Träger 80 in Form von Winkeleisen beispielsweise an die Rückkanten der Seitenwände 18 angeschlossen werden können.

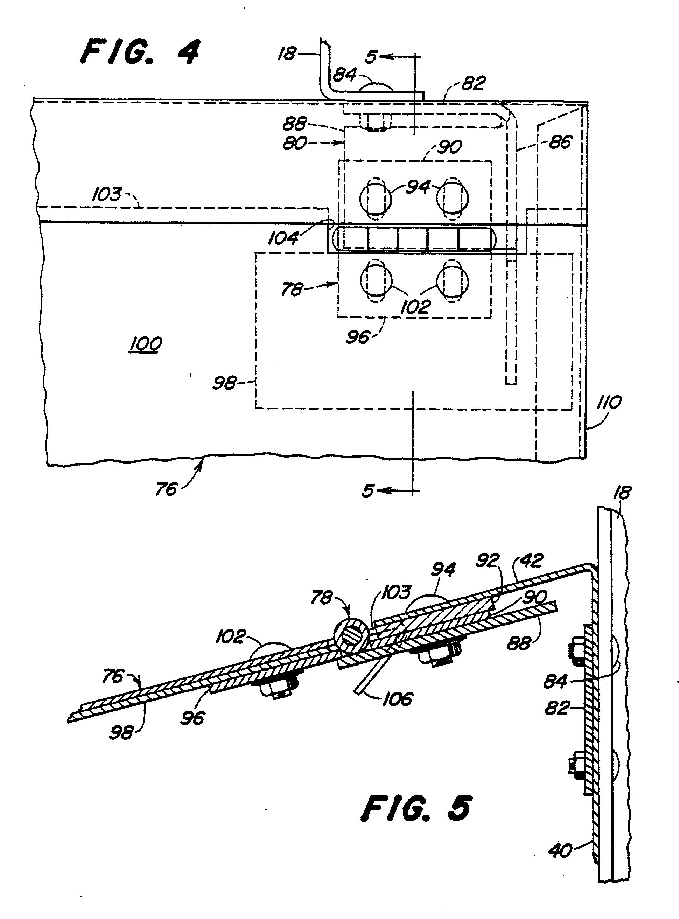

Wie im einzelnen am besten aus den Fig. 4 und 5 hervorgeht, besteht jeder Träger 80 aus einem quer verlaufenden vertikalen Teil 82, der über Schrauben 84 mit den Seitenwänden 18 der Auswurfklappe 20 verbunden sein kann und in einen vertikalen, längs verlaufenden Teil 86 übergeht, dessen oberes Ende jeweils mit einem nach unten und rückwärts geneigt verlaufenden Querstück 88 in Verbindung steht. Die beiden Querstük-

ke 88 liegen unterhalb des Flansches 42 der ersten Wand 40 und sind zu dem Flansch 42 parallel angeordnet. Beide Scharniere 78 weisen einen vorderen Teil 90, der jeweils auf den Querstücken 88 unter einer mit dem Flansch 42 verbundenen Scheibe 92 aufliegt, und einen rückwärtigen Teil 96 auf. Die Befestigung eines jeden vorderen Teils 90 erfolgt über zwei Schrauben 94, die durch entsprechende Bohrungen in dem Flansch 42, der Scheibe 92, dem Querstück 88 und natürlich dem vorderen Teil 90 hindurchgeführt sind, während zur Befestigung der beiden rückwärtigen Teile 96 wiederum jeweils zwei Schrauben 102 dienen, die durch Bohrungen in den rückwärtigen Teilen 96, einer Versteifungsplatte 98 und der Oberwand 100 des Deckels 76 geführt sind. Die Versteifungsplatte 98 ist dabei mit der Unterseite der Oberwand 100 punktverschweißt, und die Oberwand 100 weist zumindest in diesem Bereich denselben Neigungswinkel wie der Flansch 42 auf. Damit die Scharniere 78 leicht zueinander ausgerichtet werden können, um eine horizontale quer verlaufende Schwenkachse für den Deckel 76 zu bilden, sind die Bohrungen in den vorderen und rückwärtigen Teilen 90 und 96 der Scharniere 78 als Langlochöffnungen ausgebildet, so daß die Scharniere 78 entsprechend einstellbar sind. Aus der Fig. 4 ist zu ersehen, daß sich ein vorderer Endteil 103 der Oberwand 100 über die Scharnierachse hinaus bis unter den Flansch 42 erstreckt und im Bereich 104 der Scharniere 78 entsprechend ausgespart ist, um für die Gelenkverbindung den nötigen Freiraum zu bilden. Der zwischen den Scharnieren 78 gelegene Bereich 106 des vorderen Endteils 103 der Oberwand 100 ist, wie aus Fig. 5 zu ersehen ist, nach unten abgebogen, so daß keine scharfen Kanten entstehen, an denen sich eine Bedienungsperson beim Laden einer Rolle 74 mit Umhüllungsmaterial verletzen könnte, insbesondere wenn sie den mit der Rolle 74 beladenen Ladebügel 62 verschwenkt. Zusätzlich, falls erwünscht, können die Kanten des Endteils 103 noch abgepolstert werden. Bedeutend ist die Tatsache, daß sich der vordere Endteil 103 der Oberwand 100 bis unter den Flansch 42 erstreckt und auch gegen dessen Unterseite anliegt, wodurch eine Abdichtung entsteht, die ein Eindringen von Wasser, Staub oder anderen schädlichen Fremdteilen verhindert, wenn sich der Deckel 76 in seiner Betriebs- oder geschlossenen Stellung befindet. Eine ähnliche Wirkung haben die seitlichen Flansche 41, da sie sich in der Betriebsstellung des Deckels 76 dicht neben dessen Seitenwänden 110 befinden.

Um sicherzustellen, daß der Deckel 76 in seiner in Fig. 2 gezeigten Offenstellung oder in seiner in Fig. 3 wiedergegebenen Betriebsstellung nach einem Verschwenken von Hand durch eine Bedienungsperson auch verbleibt, sind zwei Gasdruckfedern 112 vorgesehen, die sich zwischen dem Dek-kel 76 und den Trägern 80 erstrecken. Hierzu sind zwei mit Querabstand zueinander angeordnete Laschen 114 mit der inneren Oberfläche einer Rückwand 116 des Deckels 76 in deren mit Bezug auf die Betriebsstellung unteren Bereich befestigt, so daß jede Gasdruckfeder 112 einenends mit einer Lasche 114 und anderenends mit dem jeweiligen Teil 86 der Träger 80 verbindbar ist. Die Aktionslinie einer jeden Feder ist so gelegt mit Bezug auf die durch die Scharniere 78 gebildete Schwenkachse für den Deckel 76, daß beim Verschwenken des Deckels über seine Mittenstellung hinaus nach oben oder unten - die Federn bestrebt sind, den Dekkel in seine jeweilige Endlage zu verschwenken und auch dort zu halten. Selbstverständlich tragen die Federn dann auch dazu bei, daß in der Betriebsstellung keine Fremdkörper oder Feuchtigkeit durch die dichtend gegeneinanderliegenden Flächen in das Innere des Zuführgehäuses gelangen können.

## Ansprüche

1. Rundballenpresse (10) mit einer Vorrichtung (24) zum Umhüllen eines fertig gewickelten Rundballens in einer Ballenformkammer (12), die ein Zuführgehäuse (38) mit einer Bodenwand (43) und einer ersten im wesentlichen vertikal verlaufenden und sich quer über die Breite der Ballenformkammer (12) erstreckenden Wand (40) zur Aufnahme des rollenförmigen Umhüllungsmaterials aufweist, das über einen aus einer Offenstellung in eine Betriebsstellung vertikal verschwenkbaren, mit einer Oberwand (100) versehenen Deckel (76) in der Betriebsstellung verschließbar ist, dadurch gekennzeichnet, daß die erste Wand (40) an ihrem oberen Ende mit einem von der Ballenformkammer (12) fort gerichteten Flansch (42) versehen ist und sich die Oberwand (100) in der Betriebsstellung zumindest teilweise abdichtend unter den Flansch (42) erstreckt.

2. Rundballenpresse nach Anspruch 1, dadurch gekennzeichnet, daß unterhalb des relativ kurzen Flansches (42) und mit diesem verbunden zwei Träger (80) vorgesehen sind, die jeweils ein Scharnier (78) aufnehmen, das anderenends mit der Oberwand (100) des Deckels (76) verbunden ist.

3. Rundballenpresse nach Anspruch 1 oder 2, dadurch gekennzeichnet, daß die erste Wand (40) an ihren Seiten mit vertikal verlaufenden Flanschen (41) versehen ist, die in der Betriebsstellung die Seitenwände (110) des Deckels (76) umfassen.

4. Rundballenpresse nach einem oder mehreren der vorherigen Ansprüche, dadurch gekennzeichnet, daß der Deckel (76) über mindestens ein Federelement in seiner Offenstellung und gegebenenfalls in seiner Betriebsstellung gehalten wird.

5. Rundballenpresse nach Anspruch 4, dadurch gekennzeichnet, daß als Federelement zwei Gasdruckfedern (112) vorgesehen sind, die einenends an den auch mit der ersten Wand (40) verbundenen Trägern (80) und anderenends an mit Bezug auf die Betriebsstellung im unteren Bereich einer Rückwand (116) des Deckels (76) oder der Seitenwände (110) angebrachten Laschen (114) angreifen.

6. Rundballenpresse nach Anspruch 2, dadurch gekennzeichnet, daß die Scharniere (78) einstellbar ausgebildet sind.

FIG. 1

**FIG. 2**

FIG. 3

FIG. 4

FIG. 5

| Europäisches Patentamt | EUROPÄISCHER RECHERCHENBERICHT | |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | US-A-4691503 (FRERICH) <br> * Spalte 2, Zeile 46 - Spalte 3, Zeile 32; Figuren 1, 2 * | 1 | A01F15/08 |
| A | DE-B-1128615 (AMERICAN LINEN SUPPLY) <br> * das ganze Dokument * | 1 | |

| | | | RECHERCHIERTE SACHGEBIETE (Int. Cl.5 ) |
|---|---|---|---|
| | | | A01F <br> A47K |

Der vorliegende Recherchenbericht wurde für alle Patentansprüche erstellt

| Recherchenort | Abschlußdatum der Recherche | Prüfer |
|---|---|---|
| DEN HAAG | 01 OKTOBER 1990 | HERYGERS J.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes Dokument

EPO FORM 1503 03.82 (P0403)